# EUROPÄISCHE PATENTSCHRIFT

(11) **EP 2 573 703 B1**
(45) Veröffentlichungstag und Bekanntmachung des Hinweises auf die Patenterteilung: **11.01.2017**
(21) Anmeldenummer: 12005957.1
(22) Anmeldetag: 20.08.2012
(51) Int. Cl.: G06K 7/10, G06K 19/073, G06K 19/077

(54) **Vorrichtung und Verfahren zur Personalisierung von kontaktlosen Datenträgern**
Method and device for personalising contactless data carriers
Dispositif et procédé de personnalisation de supports de données sans contact

(30) Priorität: 26.09.2011 DE 102011114409
(43) Veröffentlichungstag der Anmeldung: 27.03.2013
(73) Patentinhaber: Giesecke & Devrient GmbH, 81677 München (DE)
(72) Erfinder: Finkenzeller, Klaus, 85774 Unterföhring (DE); Noras, Paul, 85586 Poing (DE)

(56) Entgegenhaltungen:
- DE-A1-102005 051 493
- US-A1- 2010 006 650

## Beschreibung

Die Erfindung betrifft eine Vorrichtung und ein Verfahren zur Personalisierung von kontaktlosen Datenträgern, insbesondere von kontaktlosen Chipkarten.

Je nach den Anwendungen, für die ein kontaktloser Datenträger, beispielsweise eine kontaktlose Chipkarte, eingesetzt werden soll, sind im Speichersystem dieses Datenträgers unterschiedliche Daten und Programme gespeichert. In der Regel wird wenigstens ein Teil dieser Daten bzw. Programme während oder erst nach der Herstellung des kontaktlosen Datenträgers mittels eines Lesegeräts in einen nichtflüchtigen Teil des Speichersystems des kontaktlosen Datenträgers eingeschrieben. Dieser Einschreibvorgang wird üblicherweise als Personalisierung bezeichnet. Der Begriff "Personalisierung" wird dabei gleichermaßen als Sammelbegriff für das Einschreiben allgemeiner Daten und Programme, die für mehrere kontaktlose Datenträger vorgesehen sind, wie als Spezialbegriff für das Einschreiben von Daten verwendet, die für einen bestimmten kontaktlosen Datenträger individuell sind. Für das Einschreiben von Daten und Programmen, die gleichermaßen für mehrere kontaktlose Datenträger vorgesehen sind, wird häufig auch der Begriff "Initialisierung" verwendet. Der Prozess des Initialisierens bildet somit einen ersten von zwei Abschnitten beim Personalisieren eines Datenträgers, bei dem der Datenträger mit Allgemeindaten versehen wird, die für alle Datenträger des gleichen Typs identisch sind. Im zweiten Abschnitt, der "Individualisierung", wird jeder Datenträger mit Individualisierungsdaten versehen, die beispielsweise solche Daten enthalten, die den einzelnen Datenträger an den Endkunden anpassen.

In dieser Anmeldung wird der Begriff "Personalisierung" jeweils stets mit seiner allgemeinen Bedeutung verwendet, die nicht näher nach der Art der eingeschriebenen Daten unterscheidet. Mit anderen Worten, der hierin verwendete Begriff "Personalisierung" kann grundsätzlich gleichermaßen eine Individualisierung bzw. Personalisierung im engeren Sinn als auch eine Initialisierung eines Datenträgers umfassen.

Zur Steigerung der Durchsatzrate sind Vorrichtungen zur Personalisierung von kontaktlosen Datenträgern entwickelt worden, bei denen eine Vielzahl von kontaktlosen Datenträgern parallel personalisiert werden können. Dazu wird in der Regel eine entsprechende Anzahl von räumlich benachbart angeordneten Lesegeräten zur kontaktlosen Übertragung der Personalisierungsdaten benötigt, da üblicherweise jeweils ein kontaktloser Datenträger mittels eines Lesegerätes personalisiert wird.

Es ist bekannt, dass die kontaktlose Datenübertragung von einem Lesegerät zu einem kontaktlosen Datenträger in einer Entfernung von bis zu zehn und mehr Metern von einem Angreifer mit einem Empfangsgerät abgehört werden kann. Dies stellt ein Problem dar, da Daten von einem Lesegerät aus Zeit- und Kostengründen oftmals unverschlüsselt an einen kontaktlosen Datenträger übertragen werden, und zwar insbesondere dann, wenn es sich um sicherheitskritische Daten, z.B. persönliche oder geldwerte Daten, wie eine Kreditkartennummer, handelt, die im Klartext von einem Angreifer mitgelesen werden könnten. Eine mögliche Gegenmaßnahme wird in der DE 102004061478 beschrieben, in der ein Verfahren zur Personalisierung von kontaktlosen Datenträgern offenbart wird, bei dem durch eine koaxiale Antennenanordnung ein Kommunikationsbereich eines Lesegeräts von einem mit einem Störsignal überlagerten Bereich abgegrenzt wird. Das in der DE 102004061478 beschriebene Verfahren kann jedoch nicht in den vorstehend beschriebenen Vorrichtungen zur parallelen Personalisierung mit einer Vielzahl von Lesegeräten eingesetzt werden, da die sich entsprechend ausgestalten Lesegeräte gegenseitig stören würden.

Aus der US 2010/0006650 A1 ist eine Personalisierungsvorrichtung bekannt, die eine Vielzahl von Lesegeräten umfasst, die jeweils Daten kontaktlos an einen Datenträger übertragen.

Die DE 10 2005 051 493 A1 beschreibt ein Vorrichtung zur abhörgeschützten Kommunikation, welches Störsignale zur Maskierung bzw. Auslöschung von Nutzsignalen aussendet. Es besteht jedoch keine Abhängigkeit zwischen Störsignalen und Nutzsignalen.

Der Erfindung liegt die Aufgabe zugrunde, die Personalisierung von kontaktlosen Datenträgern abhörsicher zu machen. Insbesondere ist es Aufgabe der vorliegenden Erfindung, das Abhören von kontaktloser Kommunikation in einer Umgebung mit einer Vielzahl räumlich benachbart angeordneter Lesegeräte als Teil einer Vorrichtung zur Personalisierung von kontaktlosen Datenträgern zu erschweren oder bevorzugt ganz zu unterbinden.

Diese Aufgabe wird erfindungsgemäß durch den Gegenstand des Anspruchs 1 gelöst. Ein entsprechendes Verfahren zur Personalisierung von kontaktlosen Datenträgern ist Gegenstand des unabhängigen Verfahrensanspruchs. Vorteilhafte Weiterbildungen der Erfindung sind in den Unteransprüchen definiert.

Gemäß einem ersten Aspekt der Erfindung wird eine Vorrichtung zur Personalisierung von kontaktlosen Datenträgern, insbesondere kontaktlosen Chipkarten, bereitgestellt. Die Personalisierungsvorrichtung umfasst zumindest zwei räumlich benachbart angeordnete Lesegeräte, die jeweils dazu ausgestaltet sind, Daten kontaktlos an einen kontaktlosen Datenträger zu übertragen.

Gemäß einem zweiten Aspekt der Erfindung wird ein entsprechendes Verfahren zur Personalisierung von kontaktlosen Datenträgern, insbesondere kontaktlosen Chipkarten, bzw. zum Betreiben der erfindungsgemäßen Personalisierungsvorrichtung bereitgestellt.

Die Erfindung geht von dem Grundgedanken aus, die räumlich benachbart angeordneten Lesegeräte der Personalisierungsvorrichtung derart anzusteuern, dass im Betrieb immer dann, wenn zumindest ein erstes Lesegerät potentiell sicherheitskritische Personalisierungsdaten an einen kontaktlosen Datenträger sendet, zumindest ein räumlich benachbartes zweites Lesegerät derart Zufallsdaten aussendet, dass sich die vom ersten Lesegerät ausgesendeten Personalisierungsdaten und die vom zweiten Lesegerät ausgesendeten Zufallsdaten (bzw. die entsprechenden Signale) derart überlagern, dass ein entfernter Angreifer, der die Überlagerung der vom ersten Lesegerät ausgesendeten Personalisierungsdaten und der vom zweiten Lesegerät ausgesendeten Zufallsdaten (bzw. die entsprechenden Signale) empfängt, nicht auf die vom ersten Lesegerät ausgesendeten potentiell sicherheitskritischen Personalisierungsdaten zurück schließen kann. Mit anderen Worten, für ein entferntes Empfangsgerät ergibt sich eine Überlagerung von zeitlich korrelierten Signalen aus potentiell sicherheitskritischen Personalisierungsdaten und Zufallsdaten ohne Informationsgehalt, die sich nicht in ihre Einzelteile zerlegen lässt.

Ferner umfasst die Personalisierungsvorrichtung vorzugsweise eine Steuereinrichtung, die dazu ausgestaltet ist, die kontaktlose Übertragung der Daten von den Lesegeräten geeignet zu steuern. Die Funktion der Steuereinrichtung kann aber auch durch eine entsprechende Anpassung der Lesegeräte selbst, beispielsweise mittels einer geeignet ausgestalteten Hardware- und/ oder Softwareerweiterung, erfolgen.

Vorzugsweise werden das erste Lesegerät, das potentiell sicherheitskritische Personalisierungsdaten aussendet, und das zweite Lesegerät, das Zufallsdaten ohne Informationsgehalt aussendet, derart angesteuert bzw. synchronisiert, dass die Übertragung der Personalisierungsdaten vom ersten Lesegerät zeitgleich mit der Übertragung der Zufallsdaten vom zweiten Lesegerät erfolgt.

Bei bevorzugten Ausführungsformen, bei denen die Personalisierungsvorrichtung mehr als zwei Lesegeräte umfasst, die potentiell sicherheitskritische Personalisierungsdaten aussenden, wird vorzugsweise das Aussenden dieser Personalisierungsdaten synchronisiert. Hierzu wird vorzugsweise von der Steuereinrichtung ein Taktsignal vorgegeben, das Zeitschlitze definiert, in denen die Lesegeräte Personalisierungsdaten aussenden können. Mittels dieser bevorzugten Ausgestaltung kann beispielsweise der Fall verhindert werden, dass ein Lesegerät bereits eine Antwort von einem kontaktlosen Datenträger erhält, während ein benachbartes Lesegerät noch Personalisierungsdaten aussendet.

Es ist beispielsweise denkbar, dass die vom zweiten Lesegerät ausgesendeten Zufallsdaten aus einer Folge von für den kontaktlosen Datenträger unverständlichen Zufallszahlen bestehen, d.h. die Zufallszahlen weisen keinen Informationsgehalt auf. Aus Zufallszahlen bestehende Bitfolgen lassen sich beispielsweise mittels eines als Hardware und/ oder als Software ausgestalteten Zufallszahlengenerators erzeugen. Bei den Zufallsdaten sollte jedoch sichergestellt sein, dass nicht zufällig ein gültiges Kommando an den kontaktlosen Datenträger gesandt wird, das den kontaktlosen Datenträger dazu veranlasst, irgendwelche unerwünschten Aktionen durchzuführen. Mit anderen Worten: Der hier verwendete Begriff "Zufallsdaten" umfasst alle Arten von Daten, die bei einer Überlagerung mit den potentiell sicherheitskritischen Personalisierungsdaten dazu führen, dass die potentiell sicherheitskritischen Personalisierungsdaten aus der Überlagerung nicht wieder extrahiert bzw. zurück gewonnen werden können, und keine gültigen Kommandos für den kontaktlosen Datenträger darstellen. Alternativ ist es vorstellbar, dass die vom zweiten Lesegerät ausgesendete Folge von Zufallsdaten mit einem "Do Nothing"-Kommando beginnt, das von dem kontaktlosen Datenträger ohne weitere Bearbeitung mit einem "OK"-Kommando bestätigt wird.

Gemäß einer bevorzugten Ausführungsform sind die Lesegeräte Teil einer Aktivierungseinrichtung der Personalisierungsvorrichtung, die dazu ausgestaltet ist, jeweils einen kontaktlosen Datenträger über eine Aktivierungszeitspanne hinweg im Aktivierungs- bzw. Kommunikationsbereich eines Lesegeräts zu halten, während der der kontaktlose Datenträger Daten vom Lesegerät empfangen kann. Die Personalisierungsvorrichtung umfasst vorzugsweise ferner eine Zuführeinrichtung, die den Lesegeräten der Aktivierungseinrichtung die zu personalisierenden kontaktlosen Datenträger zuführt, und/ oder eine Abführeinrichtung, welche die von den Lesegeräten der Aktivierungseinrichtung personalisierten kontaktlosen Datenträger von der Aktivierungseinrichtung wieder abführt.

Gemäß einer bevorzugten Ausführungsform ist die Aktivierungseinrichtung als eine Aktivierungstrommel ausgestaltet, an der, vorzugsweise in regelmäßigen Abständen voneinander, die Lesegeräte angebracht sind und die im Betrieb zusammen mit den Lesegeräten um eine Rotationsachse rotiert. Vorzugsweise rotieren bei dieser bevorzugten Ausführungsform die kontaktlosen Datenträger mit der Aktivierungstrommel von einem Übergabeabschnitt der Zuführeinrichtung zu einem Übergabeabschnitt der Abführeinrichtung und befinden sich während dieser Bewegung, d.h. während der Aktivierungszeitspanne, jeweils derart in der Nähe eines Lesegeräts, dass das Lesegerät einen jeweiligen kontaktlosen Datenträger personalisieren kann. Gemäß bevorzugter Ausführungsformen kann ein kontaktloser Datenträger auf einer ebenen Oberfläche eines Lesegeräts aufliegen oder in einem jeweiligen Einschub in der unmittelbaren Nähe eines Lesegeräts eingebracht sein. Vorzugsweise sind die Bewegungen der Zuführeinrichtung, der Aktivierungstrommel und/ oder der Abführeinrichtung derart synchronisiert, dass an den Übergabeabschnitten eine nahtlose Übergabe der kontaktlosen Datenträger von der Zuführeinrichtung zu einem der auf der Aktivierungstrommel angeordneten Lesegeräte und/ oder von einem der auf der Aktivierungstrommel angeordneten Lesegeräte zur Abführeinrichtung gegeben ist.

Bei dieser bevorzugten Ausführungsform sollte die Aktivierungszeitspanne, d.h. die Zeitspanne, die für die Bewegung eines kontaktlosen Datenträgers vom Übergabeabschnitt der Zuführeinrichtung zum Übergabeabschnitt der Abführeinrichtung benötigt wird, größer als die Zeitspanne sein, die für die Übertragung der Personalisierungsdaten von einem der Lesegeräte an einen kontaktlosen Datenträger benötigt wird und als Personalisierungszeitspanne bezeichnet wird.

Insbesondere im bevorzugten Fall, dass die Aktivierungszeitspanne bedeutend größer als die Personalisierungszeitspanne ist, sendet gemäß einer bevorzugten Ausführungsform ein Lesegerät, sobald eine Personalisierung des kontaktlosen Datenträgers abgeschlossen ist, der diesem Lesegerät zugeordnet ist, eine endlose Folge von Zufallsdaten aus. Dies kann vorzugsweise bis zur Übergabe des personalisierten kontaktlosen Datenträgers an die Abführeinrichtung oder bis zur Aufnahme des nächsten zu personalisierenden kontaktlosen Datenträgers durch das Lesegerät erfolgen.

Gemäß einer weiteren bevorzugten Ausführungsform ist die Personalisierungsvorrichtung dazu geeignet, Dummy-Datenträger zu verarbeiten. Dabei sind die Lesegeräte vorzugsweise derart ausgestaltet, dass sobald ein Lesegerät einen solchen Dummy-Datenträger erkennt, das Lesegerät mit dem Aussenden von Zufallsdaten beginnt. Es ist beispielsweise vorstellbar, dass die Personalisierungsvorrichtung dazu in der Lage ist, zwischen einem zu personalisierenden kontaktlosen Datenträger und einem Dummy-Datenträger zu unterscheiden, indem ein kontaktloser Datenträger mit einem anderen Antwortsignal (ATS-Signal) auf den Kommunikationsanfrage durch ein Lesegerät als ein Dummy-Datenträger reagiert.

Bei dieser bevorzugten Ausführungsform kann im Betrieb der Personalisierungsvorrichtung sichergestellt werden, dass bereits die ersten kontaktlosen Datenträger einer Charge von zu personalisierenden kontaktlosen Datenträgern gegen ein Abhören geschützt sind, indem vor dem ersten kontaktlosen Datenträger der Charge die Personalisierungsvorrichtung zumindest mit einem Dummy-Datenträger beschickt wird. Dies stellt sicher, dass bereits Zufallsdaten ausgesendet werden, wenn die Übertragung von potentiell sicherheitskritischen Personalisierungsdaten an den ersten kontaktlosen Datenträger der Charge beginnt.

Alternativ oder zusätzlich lassen sich Dummy-Datenträger vorteilhaft insbesondere dann einsetzen, wenn die Aktivierungszeitspanne gleich der Personalisierungszeitspanne oder nur unwesentlich länger als diese ist. In diesem Fall kann gemäß einer bevorzugten Ausführungsform die Personalisierungsvorrichtung derart betrieben werden, dass in regelmäßigen oder unregelmäßigen Abständen Dummy-Datenträger in den Strom der zu personalisierenden Datenträger eingefügt werden.

Gemäß einer noch weiteren bevorzugten Ausführungsform kann vorgesehen sein, dass zumindest eines der Lesegeräte der Aktivierungseinrichtung im Betrieb der Personalisierungsvorrichtung weder einen zu personalisierenden kontaktlosen Datenträger noch einen Dummy-Datenträger aufnehmen muss, sondern derart eingerichtet ist, dass dieses Lesegerät konstant so lange Zufallsdaten aussendet, bis alle kontaktlosen Datenträger mittels der übrigen Lesegeräte der Aktivierungseinrichtung personalisiert worden sind.

Die vorstehenden bevorzugten Ausführungsformen lassen sich sowohl im Rahmen des ersten Aspekts der Erfindung, d.h. im Rahmen der Vorrichtung zur Personalisierung von kontaktlosen Datenträgern, als auch im Rahmen des zweiten Aspekts der Erfindung, d.h. im Rahmen des Verfahrens zur Personalisierung von kontaktlosen Datenträgern, vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer Vorrichtung zur Personalisierung von kontaktlosen Datenträgern gemäß einer bevorzugten Ausführungsform der Erfindung,
- Fig. 2: eine schematische Darstellung der von den Lesegeräten der Personalisierungsvorrichtung von Figur 1 erzeugten Signalfolgen zu einem Zeitpunkt T1 gemäß einer bevorzugten Ausführungsform der Erfindung, und
- Fig. 3: eine schematische Darstellung der von den Lesegeräten erfindungsgemäß erzeugten Signalfolgen nach Figur 2 bei zusätzlichen späteren Zeitpunkten T2 und T3.

Gleichartige in den Figuren dargestellte Bestandteile werden soweit wie möglich mittels derselben Bezugszeichen gekennzeichnet.

Obgleich die nachstehend beschriebene bevorzugte Ausführungsform der Erfindung eine Vorrichtung zur Personalisierung von kontaktlosen Chipkarten betrifft, wird der Fachmann erkennen, dass die Erfindung nicht auf die Personalisierung von kontaktlosen Chipkarten beschränkt ist, sondern ebenso zur Personalisierung anderer kontaktloser Datenträger bzw. Transponder vorteilhaft eingesetzt werden kann, wie z.B. UHF-RFID Transponder gemäß der Norm ISO/IEC 18000-6, Token, Chipmodule, elektronische Ausweisdokumente und dergleichen.

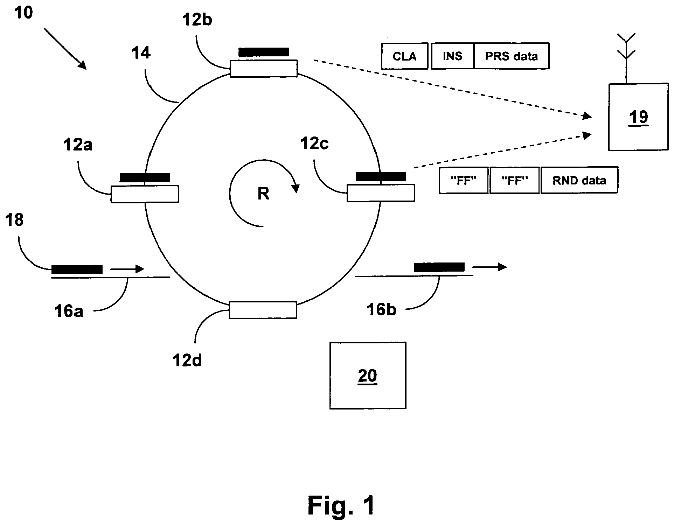

Figur 1 zeigt eine schematische Darstellung einer Vorrichtung 10 zur Personalisierung von kontaktlosen Datenträgern in Form von Chipkarten gemäß einer bevorzugten Ausführungsform der Erfindung. Die Personalisierungsvorrichtung 10 umfasst bei der in Figur 1 dargestellten bevorzugten Ausführungsform vier Lesegeräte 12a-d, die jeweils dazu ausgestaltet sind, Daten kontaktlos, d.h. über die Luftschnittstelle an eine kontaktlose Chipkarte zu übertragen und optional von dieser auszulesen. Dem Fachmann ist bekannt, dass es sich bei dem hier verwendeten Begriff "Lesegerät" um einen Fachbegriff handelt, der eine Vorrichtung bezeichnet, die einen kontaktlosen Datenträger (auch Transponder genannt) sowohl auslesen kann als auch Daten an den kontaktlosen Datenträger übertragen kann (siehe z.B. "RFID-Handbuch", Klaus Finkenzeller, 5. Auflage, Carl Hanser Verlag München, 2008, auf das hiermit vollumfänglich Bezug genommen wird).

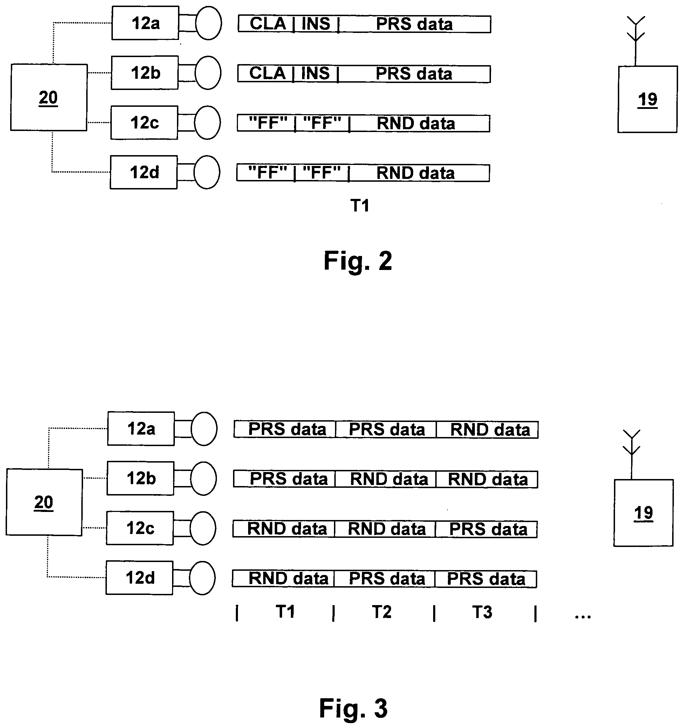

Bei der in Figur 1 dargestellten bevorzugten Ausführungsform der Personalisierungsvorrichtung sind die Lesegeräte 12a-d in regelmäßigen Abständen voneinander entlang des Umfangs einer Aktivierungseinrichtung in Form einer Aktivierungstrommel 14 angebracht, die im Betrieb um eine Rotationsachse R rotiert. Selbstverständlich kann die Erfindung jedoch auch bei Vorrichtungen zur Personalisierung von kontaktlosen Chipkarten eingesetzt werden, bei denen die Aktivierungseinrichtung bzw. die Lesegeräte 12a-d eine andere räumliche Anordnung aufweisen, beispielsweise linear angeordnet sind, wie dies beispielhaft in den Figuren 2 und 3 angedeutet ist. Die in Figur 1 dargestellte bevorzugte räumliche Anordnung der Lesegeräte 12a-d entlang der rotierenden Aktivierungstrommel 14 ist jedoch besonders gut für eine Automatisierung der Personalisierung von kontaktlosen Chipkarten mittels der Personalisierungsvorrichtung 10 geeignet.

Die Personalisierungsvorrichtung 10 umfasst neben der Aktivierungseinrichtung in Form der Aktivierungstrommel 14 mit den daran angeordneten Lesegeräten 12a-d ferner vorzugsweise eine Einrichtung 16a zum Zuführen von zu personalisierenden kontaktlosen Chipkarten sowie eine Einrichtung 16b zum Abführen von mittels den Lesegeräten 12a-d personalisierten kontaktlosen Chipkarten. Bei den Einrichtungen 16a und/ oder 16b kann es sich beispielsweise um geeignet ausgestaltete und angeordnete Förderbänder handeln, die zu personalisierende kontaktlose Chipkarten aus einem Magazin (nicht dargestellt) der Aktivierungstrommel 14 mit den daran angeordneten Lesegeräten 12a-d zuführen und/ oder personalisierte kontaktlose Chipkarten von der Aktivierungstrommel 14 und den Lesegeräten 12a-d abführen.

In Figur 1 ist dargestellt, wie eine beispielhafte kontaktlose Chipkarte, die mit dem Bezugszeichen 18 gekennzeichnet ist, von der Zuführeinrichtung 16a derart der rotierenden Aktivierungstrommel 14 zugeführt wird, dass die kontaktlose Chipkarte 18 an einem Übergabeabschnitt der Zuführeinrichtung 16a auf dem Lesegerät 12d zu einem späteren Zeitpunkt zum Aufliegen kommt, um sodann zusammen mit dem Lesegerät 12d an der Rotationsbewegung der Aktivierungstrommel 14 um die Achse R teilzunehmen. Vorzugsweise endet die Rotationsbewegung, sobald die kontaktlose Chipkarte 18 bzw. das Lesegerät 12d einen Übergabeabschnitt der Abführeinrichtung 16b erreicht, die dazu ausgestaltet ist, die kontaktlose Chipkarte 18 von dem Lesegerät 12d abzuziehen bzw. zu entfernen und beispielsweise einem Sammelbehälter für personalisierte kontaktlose Chipkarten (nicht dargestellt) zuzuführen. Je nachdem, wie viel Zeit die Personalisierung einer kontaktlosen Chipkarte in Anspruch nimmt, sind auch Ausführungsformen der Personalisierungsvorrichtung 10 denkbar, bei denen eine auf einem der Lesegeräte 12a-d aufliegende kontaktlose Chipkarte mehr als eine Umdrehung vollführt, bevor diese von der Abführeinrichtung 16b abgeführt wird.

Für eine nahtlose Übergabe einer kontaktlosen Chipkarte von der Zuführeinrichtung 16a zu der Aktivierungstrommel 14 mit den daran angebrachten Lesegeräten 12a-d sowie von der Aktivierungstrommel 14 zu der Abführeinrichtung 16b sollten die Antriebseinheiten der Aktivierungstrommel 14, der Zuführeinrichtung 16a und/ oder der Abführeinrichtung 16b geeignet synchronisiert sein.

Wie dies dem Fachmann bekannt ist, handelt es sich bei den meisten kontaktlosen Chipkarten um passive Transponder, bei denen die Energie zur Versorgung der Chipkarte aus dem elektromagnetischen Feld eines Lesegeräts gewonnen werden muss. Hierzu muss sich eine kontaktlose Chipkarte innerhalb eines Aktivierungs- bzw. Kommunikationsbereichs eines Lesegeräts befinden. Aber auch aktive Transponder, d.h. Transponder mit einer eigenen Energiequelle, z.B. einer Batterie, müssen sich aufgrund ihrer beschränkten Empfindlichkeit innerhalb eines Kommunikationsbereichs eines Lesegeräts befinden, um mit diesem kommunizieren zu können.

Sobald bei der in Figur 1 dargestellten bevorzugten Ausführungsform eine kontaktlose Chipkarte, z.B. die kontaktlose Chipkarte 18, mittels der Zuführeinrichtung 16a der Aktivierungstrommel 14 mit den daran angeordneten Lesegeräten 12a-d zugeführt worden ist und auf einem der Lesegeräte 12a-d, z.B. dem Lesegerät 12d, zum Aufliegen kommt, befindet sich die kontaktlose Chipkarte im Aktivierungs- bzw. Kommunikationsbereich dieses Lesegeräts und kann personalisiert werden, d.h. von dem Lesegerät, auf dem die kontaktlose Chipkarte aufliegt, mit potentiell sicherheitskritischen Personalisierungsdaten versorgt werden, um diese in einem nichtflüchtigen Speicher der kontaktlosen Chipkarte abzuspeichern. Da eine kontaktlose Chipkarte, die auf einem der Lesegeräte 12a-d aufliegt, während der Bewegung vom Übergabeabschnitt der Zuführeinrichtung 16a zum Übergabeabschnitt der Abführeinrichtung 16b im Aktivierungs- bzw. Kommunikationsbereich des entsprechenden Lesegeräts 12a-d verbleibt, kann die Dauer dieser Bewegung (hier Aktivierungszeitspanne genannt) zur Personalisierung einer sich mit der Aktivierungstrommel 14 mitbewegenden kontaktlosen Chipkarte genutzt werden. Wie dies in Figur 1 angedeutet ist, befinden sich im Betrieb der Personalisierungsvorrichtung 10 in der Regel gleichzeitig mehrere kontaktlose Chipkarten in den jeweiligen Aktivierungsbereichen von jeweiligen Lesegeräten, so dass auf diese Weise mehrere kontaktlose Chipkarten gleichzeitig personalisiert werden können, z.B. die zwei in Figur 1 dargestellten Chipkarten, die auf den Lesegeräten 12a und 12b aufliegen. Wie dies der Fachmann erkennen wird, sind gemäß der vorliegenden Erfindung ebenso Ausführungsformen denkbar, bei denen eine kontaktlose Chipkarte nicht auf einem Lesegerät aufliegt, sondern z.B. in einem Steckplatz bzw. Einschub in der Nähe des Lesegeräts eingeschoben wird, um während der Aktivierungszeitspanne im Aktivierungsbereich dieses Lesegeräts zu verbleiben.

In Figur 1 sind schematisch beispielhafte Signalfolgen dargestellt, die beispielhaft von den Lesegeräten 12b und 12c erfindungsgemäß zur Personalisierung von kontaktlosen Chipkarten ausgesendet werden. Neben den kontaktlosen Chipkarten, z.B. den auf den Lesegeräten 12b bzw. 12c aufliegenden kontaktlosen Chipkarten, können aufgrund der Abstrahlungsleistung der Lesegeräte 12a-d diese Signale auch von einem Empfangsgerät 19 eines potentiellen Angreifers abgehört werden, das sich in der Nähe der Personalisierungsvorrichtung 10 befindet und dessen Empfindlichkeit in der Regel bedeutend größer als die einer kontaktlosen Chipkarte ist.

Für eine erfindungsgemäße Ansteuerung der Lesegeräte 12a-d weist die Personalisierungsvorrichtung 10 vorzugsweise eine zentrale Steuereinheit 20 auf, die mit den Lesegeräten 12a-d jeweils geeignet verbunden ist. Es ist jedoch ebenfalls vorstellbar, dass die Personalisierungsvorrichtung 10 anstatt einer einzelnen zentralen Steuereinheit 20 für jedes Lesegerät 12a-d eine separate Steuereinheit aufweist, die jeweils als ein separates Element ausgebildet oder Teil (als Hardware und/ oder Software implementiert) des jeweiligen Lesegeräts 12a-d sein kann.

Neben der Figur 1 zeigen auch die Figuren 2 und 3 schematisch beispielhafte Signalfolgen, die sich gemäß einer bevorzugten Ausführungsform der Erfindung aus der Ansteuerung der Lesegeräte 12a-d, vorzugsweise mittels der Steuereinheit 20, ergeben und die dazu führen, dass ein Angreifer mittels einem entfernt angeordneten Empfangsgerät 19 nicht auf die potentiell sicherheitskritischen Personalisierungsdaten zurück schließen kann, die von den Lesegeräten 12a-d im Betrieb zur Personalisierung der kontaktlosen Chipkarten an diese übertragen werden. Dies wird dadurch erreicht, dass die räumlich benachbart angeordneten Lesegeräte 12a-d derart angesteuert werden, dass im Betrieb der Personalisierungsvorrichtung 10 immer dann, wenn zumindest eines der Lesegeräte 12a-d potentiell sicherheitskritische Personalisierungsdaten an eine kontaktlose Chipkarte sendet (in Figur 1 z.B. das Lesegerät 12b), zumindest ein anderes Lesegerät derart Zufallsdaten aussendet (in Figur 1 z.B. das Lesegerät 12c), dass sich die von dem einem Lesegerät ausgesendeten Personalisierungsdaten mit den von dem anderen Lesegerät ausgesendeten Zufallsdaten (bzw. die entsprechenden Signale) derart überlagern, dass ein entfernter Angreifer, der die Überlagerung der von dem einen Lesegerät ausgesendeten Personalisierungsdaten und der von dem anderen Lesegerät ausgesendeten Zufallsdaten (bzw. die entsprechenden Signale) mittels eines Empfangsgerät 19 empfängt, nicht auf die von dem einen Lesegerät ausgesendeten potentiell sicherheitskritischen Personalisierungsdaten zurück schließen kann.

Da die Kommunikation zwischen einem Lesegerät und einem kontaktlosen Datenträger üblicherweise gemäß den in der internationalen Norm ISO/IEC 7816-4 ("Identification cards - Integrated circuit cards - Part 4: Organization, security and commands for interchange") definierten Protokollen erfolgt, auf die hiermit ausdrücklich Bezug genommen wird, werden nachstehend bevorzugte Ausführungsformen der Erfindung unter Bezugnahme auf diese Norm beschrieben. Der Fachmann wird jedoch erkennen, dass der Grundgedanke der vorliegenden Erfindung nicht auf eine Kommunikation zwischen Lesegerät und kontaktloser Chipkarte unter Einhaltung dieser Norm beschränkt ist, sondern auch im Rahmen anderer Kommunikationsnormen bzw. Kommunikationsprotokolle vorteilhaft eingesetzt werden kann.

Gemäß der Norm ISO/IEC 7816-4 findet der gesamte Datenaustausch zwischen einem Lesegerät und einer kontaktlosen Chipkarte unter Verwendung von sogenannten APDUs (application protocol data units) statt. Eine APDU stellt eine Dateneinheit der Anwendungsschicht dar, also eine Art Container, mit dem Kommandos und/oder Daten an die kontaktlose Chipkarte übertragen werden. Man unterscheidet zwischen Kommando-APDUs, die von einem Lesegerät an eine kontaktlose Chipkarte gesendet werden, und Antwort-APDUs, die von einer kontaktlosen Chipkarte in Reaktion auf eine Kommando-APDU an ein Lesegerät gesendet werden. Da die vorliegende Erfindung im Wesentlichen den Kommunikationskanal von einem Lesegerät zu einer kontaktlosen Chipkarte betrifft, wird nachstehend, sofern nicht explizit etwas anderes erwähnt wird, unter einer APDU eine Kommando-APDU verstanden, d.h. eine APDU, die Kommandos und/ oder Befehle an eine kontaktlose Chipkarte überträgt.

Wie dies dem Fachmann bekannt ist, wird in der Norm ISO/IEC 7816-4 die Struktur einer APDU dahingehend definiert, dass diese aus einem Header und einem Body besteht. Der APDU-Header umfasst insbesondere ein Class-Byte (CLA), das dazu benutzt wird, Anwendungen und ihren spezifischen Befehlssatz zu kennzeichnen, sowie ein Instruction-Byte (INS), mit dem die eigentlichen Befehle bzw. Kommandos ausgewählt bzw. bestimmt werden. Der dem APDU-Header folgende APDU-Body umfasst insbesondere ein Datenfeld, das die Daten enthält, die zu dem durch CLA und INS bestimmten Kommando gehören. Für weitere Informationen zu APDUs wird auf das "Handbuch der Chipkarten", Wolfgang Rankl und Wolfgang Effing, 5. Auflage, Carl Hanser Verlag München, 2008 verwiesen, auf das hiermit vollumfänglich Bezug genommen wird.

Wie dies der Fachmann erkennt, sind die in den Figuren 1 und 2 schematisch dargstellten beispielhaften Datenpakete als APDUs angedeutet. Beispielsweise ist in Figur 1 schematisch dargestellt, dass das Lesegerät 12b eine APDU der Form [CLA |INS| PRS data] unter anderem an die auf dem Lesegerät 12b aufliegende kontaktlose Chipkarte überträgt. Da es sich bei den im Datenfeld der APDU enthaltenen "PRS data" um Personalisierungsdaten handelt, werden diese Daten augrund eines durch CLA und INS definierten geeigneten Befehls, beispielsweise eines Schreibbefehls, in den Speicher der auf dem Lesegerät 12b aufliegenden kontaktlosen Chipkarte eingeschrieben. Während das Lesegerät 12b eine APDU aussendet, die zur Personalisierung der auf dem Lesegerät 12b aufliegenden kontaktlosen Chipkarte dient, sendet das Lesegerät 12c Zufallsdaten ohne Informationsgehalt aus. Dies wird mittels der APDU der Form ["FF" |"FF"| RND data] angedeutet, wobei "FF" die Hexadezimaldarstellung eines ungültigen Kommandos darstellt (oder alternativ für ein "Do Nothing"-Kommando steht) und "RND data" eine Folge von Zufallszahlen ist. Würde auch der APDU-Header mit Zufallsdaten gefüllt werden, bestünde die Möglichkeit, dass zufällig ein gültiges Kommando entsteht, das eine kontaktlose Chipkarte möglicherweise dazu veranlassen würde, irgendwelche unerwünschten Aktionen durchzuführen. Daher umfasst der hier verwendete Begriff "Zufallsdaten" alle Arten von Zufallsdaten, außer solchen Zufallsdaten die gültige Chipkarten-Kommandos darstellen (bis auf das vorstehend erwähnte "Do Nothing"-Kommando).

Da sich die Aktivierungstrommel 14 um die Rotationsachse R in Richtung des dargestellten Pfeils dreht und dadurch die Lesegeräte 12a-d vom Übergabeabschnitt der Zuführeinrichtung 16a, wo jeweils eine zu personalisierende kontaktlose Chipkarte auf einem jeweiligen Lesegerät abgelegt wird, zum Übergabeabschnitt der Abführeinrichtung 16b, wo jeweils eine personalisierte kontaktlose Chipkarte von einem jeweiligen Lesegerät abgezogen wird, und wieder zurück zum Übergabeabschnitt der Zuführeinrichtung 16a bewegt werden, um eine neue zu personalisierende kontaktlose Chipkarte aufzunehmen, steht zu dem in Figur 1 dargestellten Zeitpunkt (nachstehend T1 genannt) das Lesegerät 12c schon länger in Kommunikation mit der darauf liegenden kontaktlosen Chipkarte als das Lesegerät 12b (oder das Lesegerät 12a) mit der darauf liegenden kontaktlosen Chipkarte. Mit anderen Worten, bei dem in Figur 1 dargestellten Zustand hatte das Lesegerät 12c bereits mehr Zeit zur Personalisierung einer kontaktlosen Chipkarte als das Lesegerät 12b (oder das Lesegerät 12a).

Bei dem in Figur 1 dargestellten Fall kann es sein, dass das Lesegerät 12c die Personalisierung der darauf liegenden kontaktlosen Chipkarte bereits abgeschlossen hat, während das Lesegerät 12b und das Lesegerät 12a noch dabei sind, die jeweils darauf liegenden kontaktlosen Chipkarten zu personalisieren. Dieser Fall kann bei der in Figur 1 dargestellten bevorzugten Ausführungsform auftreten, wenn die Zeitspanne, die für die Bewegung einer kontaktlosen Chipkarte vom Übergabeabschnitt der Zuführeinrichtung 16a zum Übergabeabschnitt der Abführeinrichtung 16b entlang des Umfangs der Aktivierungstrommel 14 benötigt wird und hier als Aktivierungszeitspanne bezeichnet wird, größer als die Zeitspanne ist, die für die Übertragung der Personalisierungsdaten von einem der Lesegeräte 12a-d an eine kontaktlose Chipkarte benötigt wird, um diese zu personalisieren, und hier als Personalisierungszeitspanne bezeichnet wird. Wie bereits vorstehend beschrieben, ist gemäß einer bevorzugten Ausführungsform in diesem Fall vorgesehen, dass das Lesegerät 12c, das die Personalisierung der darauf liegenden kontaktlosen Chipkarte bereits abgeschlossen hat, Zufallsdaten aussendet, die vorzugsweise die Form der vorstehend beschriebenen APDU aufweisen, d.h. ["FF" |"FF"| RND data], wobei "FF" die Hexadezimaldarstellung eines ungültigen Kommandos ist bzw. für ein "Do Nothing"-Kommando steht und "RND data" eine Folge von Zufallszahlen ist. Vorzugsweise werden derartige APDUs bzw. Zufallsdaten als Endlosfolge von dem Lesegerät 12c ausgesendet, sobald die Personalisierung der kontaktlosen Chipkarte abgeschlossen ist, die auf dem Lesegerät 12c aufliegt. Das Aussenden von Zufallsdaten durch das Lesegerät 12c kann bis zur Übergabe der darauf liegenden personalisierten kontaktlosen Chipkarte an die Abführeinrichtung 16b oder sogar bis zur Aufnahme der nächsten zu personalisierenden kontaktlosen Chipkarte am Übergabeabschnitt der Zuführeinrichtung 16a erfolgen.

Die Zufallsdaten in Form der vorstehend beschriebenen APDU, d.h. ["FF"| "FF"| RND data], haben keinen Einfluss auf die auf dem Lesegerät 12c aufliegende kontaktlose Chipkarte, da diese bereits personalisiert worden ist. Wie bereits vorstehend erwähnt, können alternativ die von dem Lesegerät 12c ausgesendeten APDUs zur Übersendung von Zufallsdaten statt eines ungültigen Kommandos ("FF") ein "Do Nothing"-Kommando enthalten, das mittels entsprechend definierter Class- und Instruction-Bytes zwischen einem Lesegerät und einer kontaktlosen Chipkarte vereinbart ist und von der kontaktlosen Chipkarte ohne weitere Bearbeitung umgehend mit einem "OK" ["90 00"] beantwortet wird.

Figur 2 zeigt schematisch eine bevorzugte Verteilung der von den Lesegeräten 12a-d ausgesendeten Signalfolgen zu dem in Figur 1 dargestellten Zeitpunkt, der in Figur 2 mit T1 bezeichnet wird. Wie vorstehend beschrieben, überträgt zu dem in Figur 1 dargestellten Zeitpunkt T1 das Lesegerät 12b Personalisierungsdaten an die darauf liegende kontaktlose Chipkarte, während das Lesegerät 12c, das zum Zeitpunkt T1 bereits die Personalisierung der darauf liegenden Chipkarte abgeschlossen hat, Zufallsdaten aussendet. Wie dies in Figur 2 angedeutet ist, sendet zum Zeitpunkt T1 das Lesegerät 12d, das die von ihm personalisierte kontaktlose Chipkarte bereits an die Abführeinrichtung 16b abgegeben hat und sich nun auf dem Weg zum Übergabeabschnitt der Zuführeinrichtung 16a befindet, um dort eine neue zu personalisierende kontaktlose Chipkarte aufzunehmen, ebenfalls Zufallsdaten aus, während das Lesegerät 12a, das erst vor kurzem eine zu personalisierende kontaktlose Chipkarte aufgenommen hat, Personalisierungsdaten an diese kontaktlose Chipkarte überträgt.

Für den vorstehend beschriebenen Fall, dass sowohl das Lesegerät 12a als auch das Lesegerät 12b Personalisierungsdaten aussenden, ist das Aussenden dieser Daten vorzugsweise synchronisiert. Hierzu wird vorzugsweise von der Steuereinrichtung 20 ein Taktsignal vorgegeben, das Zeitschlitze definiert, in denen die Lesegeräte12a und 12b Personalisierungsdaten aussenden können. Mittels dieser bevorzugten Ausgestaltung kann beispielsweise der Fall verhindert werden, dass eines der Lesegeräte bereits eine Antwort von einer kontaktlosen Chipkarte erhält, während ein benachbartes Lesegerät noch Personalisierungsdaten aussendet und sich diese beiden Lesegeräte gegenseitig stören.

In Figur 3 sind neben den Signalen bzw. APDUs, die von den Lesegeräten 12a-d zum Zeitpunkt T1 ausgesendet werden, wie dies auch in den Figuren 1 und 2 dargestellt ist, die Signale bzw. APDUs schematisch dargestellt, die von den Lesegeräten 12a-d zu späteren Zeitpunkten T2 und T3 ausgesendet werden (wobei die APDU-Header der Übersichtlichkeit halber weggelassen worden sind). Dabei beträgt der Abstand zwischen den Zeitpunkten T2 und T1 bzw. zwischen den Zeitpunkten T3 und T2 jeweils ca. eine Viertelumdrehung der Aktivierungstrommel 14. Mit anderen Worten, zum Zeitpunkt T2 beispielsweise hat sich die Aktivierungstrommel 14 gegenüber dem Zeitpunkt T1 um ca. 90 Grad weiter gedreht. Da zum Zeitpunkt T2 das Lesegerät 12d bereits eine neue zu personalisierende kontaktlose Chipkarte aufgenommen hat und das Lesegerät 12a die Personalisierung der darauf liegenden kontaktlosen Chipkarte noch nicht abgeschlossen hat, senden sowohl das Lesegerät 12d als auch das Lesegerät 12a zum Zeitpunkt T2 Personalisierungsdaten aus. Die Lesegeräte 12b und 12c hingegen senden zum Zeitpunkt T2 Zufallsdaten aus, da beide Lesegeräte 12b und 12c die Personalisierung abgeschlossen haben und das Lesegerät 12c die von ihm personalisierte kontaktlose Chipkarte bereits an die Abführeinrichtung 16b abgegeben hat. Aus denselben Gründen übertragen zum Zeitpunkt T3 die Lesegeräte 12c und 12d Personalisierungsdaten, während die Lesegeräte 12a und 12b Zufallsdaten aussenden.

Vorstehend ist der Fall erwähnt worden, dass die Aktivierungszeitspanne um einiges länger als die Personalisierungszeitspanne ist. Wie dies der Fachmann erkennt, kann die Aktivierungszeitspanne bei der in Figur 1 dargestellten bevorzugten Ausführungsform beispielsweise mittels der Rotationsgeschwindigkeit der Aktivierungstrommel 14 verändert und an die Personalisierungszeitspanne angepasst werden. Eine Alternative besteht darin, die Personalisierungsvorrichtung 10 derart auszugestalten, dass eine kontaktlose Chipkarte mindestens eine volle Umdrehung vollführt, d.h. mindestens einmal wieder am Übergabeabschnitt der Zuführeinrichtung 16a vorbeibewegt wird, bevor diese der Abführeinrichtung 16b übergeben wird. Selbstverständlich müsste in diesem Fall die Zuführung von zu personalisierenden kontaktlosen Chipkarten mittels der Zuführeinrichtung 16a entsprechend angepasst werden.

Die nachstehend beschriebene bevorzugte Ausführungsform kann insbesondere dann vorteilhaft eingesetzt werden, wenn die Aktivierungszeitspanne nur unwesentlich länger als die Personalisierungszeitspanne oder sogar gleich dieser ist. Der Fachmann wird jedoch erkennen, dass die nachstehend beschriebene bevorzugte Ausführungsform ebenso dann vorteilhaft eingesetzt werden kann, wenn die Aktivierungszeitspanne um einiges länger als die Personalisierungszeitspanne ist, wie dies im Fall der bevorzugten Ausführungsform von Figur 1 vorstehend beschrieben worden ist.

Gemäß einer weiteren bevorzugten Ausführungsform ist die Personalisierungsvorrichtung 10 dazu ausgestaltet, neben zu personalisierenden kontaktlosen Chipkarten Dummy-Chipkarten verarbeiten zu können, die nicht dazu dienen, personalisiert zu werden, sondern nur dazu, das Aussenden von Zufallsdaten durch die Lesegeräte 12a-d zu triggern. Hierzu sind die Lesegeräte 12a-d der Personalisierungsvorrichtung 10 vorzugsweise derart ausgestaltet, dass, sobald eines der Lesegerät 12a-d eine solche Dummy-Chipkarte erkennt, dieses Lesegerät mit dem Aussenden von Zufallsdaten beginnt. Mit anderen Worten, sobald eines der Lesegeräte 12a-d bemerkt, dass mittels der Zuführeinrichtung 16a eine Dummy-Chipkarte darauf abgelegt worden ist, beginnt dieses Lesegerät damit, Zufallsdaten auszusenden. Ebenso können die Lesegerät 12a-d ferner dazu ausgestaltet sein, dass sobald eines dieser Lesegeräte 12a-d erkennt, dass eine Dummy-Chipkarte aus dessen Anregungs- bzw. Kommunikationsbereich entfernt worden ist, dieses Lesegerät 12a-d das Aussenden von Zufallsdaten beendet. Beispielsweise kann ein Lesegerät dazu ausgestaltet sein, anhand unterschiedlicher Anwortsignale zwischen einer Dummy-Chipkarte und einer zu personalisierenden Chipkarte zu unterscheiden, um zu erkennen, wann sich eine Dummy-Chipkarte oder eine zu personalisierende Chipkarte im Anregungs- bzw. Kommunikationsbereich eines Lesegeräts befindet. Dies kann beispielsweise mittels einer jeweils geeigneten Ausgestaltung des ATS-Signals ("Answer to Select") einer Dummy-Chipkarte bzw. einer zu personalisierenden Chipkarte erreicht werden.

Bei einer derartigen Ausgestaltung der Personalisierungsvorrichtung 10 lässt sich diese folgendermaßen vorteilhaft betreiben. Indem in regelmäßigen oder unregelmäßigen Abständen Dummy-Chipkarten in den zu verarbeitenden Strom von zu personalisierenden kontaktlosen Chipkarten eingefügt werden (beispielsweise eine Dummy-Chipkarte pro zwei zu personalisierenden kontaktlosen Chipkarten), lässt sich auch für den Fall, dass die Aktivierungszeitspanne nur unwesentlich länger als die Personalisierungszeitspanne oder sogar gleich dieser ist, erreichen, dass immer dann, wenn ein Lesegerät potentiell sicherheitskritische Personalisierungsdaten an eine kontaktlose Chipkarte übertragt, ein anderes Lesegerät, auf dem eine Dummy-Chipkarte abgelegt ist, Zufallsdaten aussendet.

Um bereits die Übertragung von Personalisierungsdaten an die ersten kontaktlosen Chipkarten einer Charge von zu personalisierenden kontaktlosen Chipkarten gegen ein Abhören zu schützen, ist gemäß einer weiteren bevorzugten Ausführungsform vorgesehen, dass vor der Beschickung der Personalisierungsvorrichtung 10 mit der ersten zu personalisierenden kontaktlosen Chipkarte der Charge die Personalisierungsvorrichtung 10 zumindest mit einer Dummy-Chipkarte beschickt wird. Dies stellt sicher, dass bereits Zufallsdaten von dem Lesegerät ausgesendet werden, auf dem die Dummy-Chipkarte abgelegt ist, wenn die Übertragung von potentiell sicherheitskritischen Personalisierungsdaten an die erste zu personalisierende kontaktlose Chipkarte der Charge beginnt. Genauso kann am Ende einer Charge von zu personalisierenden kontaktlosen Chipkarten vorgegangen werden, d.h. nach der Beschickung der Personalisierungsvorrichtung 10 mit der letzten zu personalisierenden kontaktlosen Chipkarte der Charge kann die Personalisierungsvorrichtung 10 zumindest mit einer Dummy-Chipkarte beschickt werden.

Gemäß einer noch weiteren bevorzugten Ausführungsform kann vorgesehen sein, dass zumindest eines der Lesegeräte 12a-d der Aktivierungstrommel 14 im Betrieb der Personalisierungsvorrichtung 10 dazu ausgestaltet ist, konstant so lange Zufallsdaten aus zu senden, bis alle kontaktlosen Chipkarten mittels der übrigen Lesegeräte der Aktivierungstrommel 14 personalisiert worden sind, und zwar unabhängig davon, ob auf dem betreffenden Lesegerät eine Dummy-Chipkarte abgelegt ist oder nicht.

Anhand der vorstehend beschriebenen bevorzugten Ausführungsformen erkennt der Fachmann, dass weitere vorteilhafte Ausgestaltungen verwirklicht werden können, die von der Erfindung umfasst werden. Beispielsweise wird der Fachmann erkennen, dass, obgleich vorstehend von kontaktlosen Chipkarten gesprochen worden ist, die Erfindung sich auch vorteilhaft zur Personalisierung von Dual-Interface-Karten einsetzen lässt, d.h. Chipkarten mit einer kontaktbehafteten und einer kontaktlosen Schnittstelle.

## Patentansprüche

1. Vorrichtung (10) zur Personalisierung von kontaktlosen Datenträgern, insbesondere kontaktlosen Chipkarten, umfassend:
zumindest zwei Lesegeräte (12a-d), die jeweils dazu ausgestaltet sind, Daten kontaktlos an einen kontaktlosen Datenträger zu übertragen,
wobei im Betrieb die Lesegeräte (12a-d) derart angesteuert werden, dass immer dann, wenn zumindest ein erstes Lesegerät Personalisierungsdaten an einen kontaktlosen Datenträger sendet, zumindest ein zweites Lesegerät Zufallsdaten aussendet,
**dadurch gekennzeichnet,**
**dass** die Lesegeräte (12a-d) derart ausgestaltet sind, dass dann, wenn ein Lesegerät (12a-d) die Personalisierung eines kontaktlosen Datenträgers abgeschlossen hat, dieses Lesegerät (12a-d) eine endlose Folge von Zufallsdaten aussendet.

2. Personalisierungsvorrichtung (10) nach Anspruch 1, wobei zur Ansteuerung der Lesegeräte (12a-d) die Personalisierungsvorrichtung (10) eine zentrale Steuereinrichtung (20) aufweist oder separate Steuereinrichtungen als Hard- und/ oder Software in die zumindest zwei räumlich benachbarten Lesegeräte (12a-d) integriert sind.

3. Personalisierungsvorrichtung (10) nach Anspruch 1, wobei Lesegeräte (12a-d) Teil einer Aktivierungseinrichtung (14) sind, die dazu ausgestaltet ist, jeweils einen kontaktlosen Datenträger über eine Aktivierungszeitspanne im Aktivierungs- bzw. Kommunikationsbereich jeweils eines Lesegeräts (12a-d) zu halten, während der der kontaktlose Datenträger Daten vom jeweiligen Lesegerät (12a-d) empfangen kann, und die Personalisierungsvorrichtung (10) ferner eine Zuführeinrichtung (16a) zum Zuführen von kontaktlosen Datenträgern zu der Aktivierungseinrichtung (14) und/ oder eine Abführeinrichtung (16b) zum Abführen von kontaktlosen Datenträgern von der Aktivierungseinrichtung (14) aufweist.

4. Personalisierungsvorrichtung (10) nach Anspruch 3, wobei die Aktivierungseinrichtung als Aktivierungstrommel (14) ausgestaltet ist, an der die Lesegeräte (12a-d) derart angebracht sind, dass diese im Betrieb gemeinsam mit der Aktivierungstrommel (14) um eine Rotationsachse (R) rotieren.

5. Personalisierungsvorrichtung (10) nach Anspruch 4, wobei die Aktivierungstrommel (14) derart ausgestaltet ist, dass die von den Lesegeräten (12a-d) aufgenommenen kontaktlosen Datenträger mittels der Aktivierungstrommel (14) von einem Übergabeabschnitt der Zuführeinrichtung (16a) zu einem Übergabeabschnitt der Abführeinrichtung (16b) bewegt werden und sich während dieser Bewegung jeweils derart in der Nähe eines Lesegeräts (12a-d) befinden, dass ein jeweiliges Lesegerät (12a-d) einen jeweiligen kontaktlosen Datenträger personalisieren kann.

6. Personalisierungsvorrichtung (10) nach einem der Ansprüche 1 bis 5, wobei die Lesegeräte (12a-d) jeweils dazu ausgestaltet sind, nach der Personalisierung eines kontaktlosen Datenträgers solange eine endlose Folge von Zufallsdaten auszusenden, bis das jeweilige Lesegerät (12a-d) den personalisierten kontaktlosen Datenträger an die Abführeinrichtung (16b) abgegeben hat oder einen nächsten zu personalisierenden kontaktlosen Datenträger von der Zuführeinrichtung (16a) aufgenommen hat.

7. Personalisierungsvorrichtung (10) nach einem der vorhergehenden Ansprüche, wobei die Personalisierungsvorrichtung (10) dazu ausgestaltet ist, mit Dummy-Datenträgern beschickt zu werden, und die Lesegeräte (12a-d) jeweils derart ausgestaltet sind, dass, sobald ein jeweiliges Lesegerät (12a-d) einen Dummy-Datenträger erkennt, das jeweilige Lesegerät (12a-d) mit dem Aussenden von Zufallsdaten beginnt.

8. Verfahren zur Personalisierung von kontaktlosen Datenträgern, insbesondere kontaktlosen Chipkarten, wobei das Verfahren die folgenden Schritte umfasst:
das Beschicken einer Personalisierungsvorrichtung (10) mit kontaktlosen Datenträgern, wobei die Personalisierungsvorrichtung (10) zumindest zwei Lesegeräte (12a-d) aufweist, die jeweils dazu ausgestaltet sind, Daten kontaktlos an einen kontaktlosen Datenträger zu übertragen; und
das Ansteuern Lesegeräte (12a-d) derart, dass immer dann, wenn zumindest ein erstes Lesegerät Personalisierungsdaten an einen kontaktlosen Datenträger sendet, zumindest ein zweites Lesegerät Zufallsdaten aussendet, die sich mit den Personalisierungsdaten derart überlagern, dass ein Angreifer, der die Überlagerung der vom ersten Lesegerät ausgesendeten Personalisierungsdaten und der vom zweiten Lesegerät ausgesendeten Zufallsdaten empfängt, nicht auf die vom ersten Lesegerät ausgesendeten Personalisierungsdaten zurück schließen kann.

## Claims

1. An apparatus (10) for personalizing contactless data carriers, in particular contactless chip cards, comprising:
at least two reading devices (12a-d) that are each configured to transmit data contactlessly to a contactless data carrier,
wherein the reading devices (12a-d) are controlled in such a fashion during operation that whenever at least one first reading device sends personalization data to a contactless data carrier, at least one second reading device emits random data,
**characterized in that**
the reading devices (12a-d) are configured such that when a reading device (12a-d) has concluded the personalization of a contactless data carrier, said reading device (12a-d) emits an endless sequence of random data.

2. The personalization apparatus (10) according to claim 1, wherein for controlling the reading devices (12a-d) the personalization apparatus (10) has a central control device (20) or separate control devices are integrated as hardware and/or software in the at least two spatially adjacent reading devices (12a-d).

3. The personalization apparatus (10) according to claim 1, wherein reading devices (12a-d) form part of an activation device (14) which is configured in each case to hold a contactless data carrier in the activation or communication range of a respective reading device (12a-d) during an activation period, during which the contactless data carrier can receive data from the respective reading device (12a-d), and the personalization apparatus (10) further has a feeding device (16a) for feeding contactless data carriers to the activation device (14) and/or a discharging device (16b) for discharging contactless data carriers from the activation device (14).

4. The personalization apparatus (10) according to claim 3, wherein the activation device is configured as an activation drum (14) on which the reading devices (12a-d) are mounted such that they rotate along with the activation drum (14) about a rotation axis (R) during operation.

5. The personalization apparatus (10) according to claim 4, wherein the activation drum (14) is configured such that the contactless data carriers received by the reading devices (12a-d) are moved by means of the activation drum (14) from a transfer section of the feeding device (16a) to a transfer section of the discharging device (16b) and, during this movement, are respectively so disposed in the vicinity of a reading device (12a-d) that a respective reading device (12a-d) can personalize a respective contactless data carrier.

6. The personalization apparatus (10) according to any of the claims 1 to 5, wherein the reading devices (12a-d) are each configured to emit an endless sequence of random data after the personalization of a contactless data carrier for such a time until the respective reading device (12a-d) has submitted the personalized contactless data carrier to the discharging device (16b) or has received a next contactless data carrier to be personalized from the feeding device (16a).

7. The personalization apparatus (10) according to any of the preceding claims, wherein the personalization apparatus (10) is configured to be fed with dummy data carriers, and the reading devices (12a-d) are each configured such that once a respective reading device (12a d) recognizes a dummy data carrier, said respective reading device (12a-d) starts emitting random data.

8. A method for personalizing contactless data carriers, in particular contactless chip cards, wherein the method comprises the following steps of:
loading a personalization apparatus (10) with contactless data carriers, wherein the personalization apparatus (10) comprises at least two reading devices (12a-d) that are each configured to transmit data contactlessly to a contactless data carrier; and
controlling the reading devices (12a-d) such that whenever at least one first reading device sends personalization data to a contactless data carrier, at least one second reading device emits random data which overlap with the personalization data such that an attacker receiving the superposition of the personalization data emitted by the first reading device and the random data emitted by the second reading device cannot infer the personalization data emitted by the first reading device.

## Revendications

1. Dispositif (10) de personnalisation de supports de données sans contact, en particulier de cartes à puce sans contact, comprenant:
au moins deux appareils de lecture (12a-d) respectivement configurés pour transmettre sans contact des données à un support de données sans contact,
cependant que, en fonctionnement, les appareils de lecture (12a-d) sont commandés de telle façon que, chaque fois qu'au moins un premier appareil de lecture envoie des données de personnalisation à un support de données sans contact, au moins un deuxième appareil de lecture émet des données aléatoires,
**caractérisé en ce**
**que** les appareils de lecture (12a-d) sont configurés de telle façon que quand un appareil de lecture (12a-d) a achevé la personnalisation d'un support de données sans contact, cet appareil de lecture (12a-d) émet une suite sans fin de données aléatoires.

2. Dispositif de personnalisation (10) selon la revendication 1, cependant que, pour la commande des appareils de lecture (12a-d), le dispositif de personnalisation (10) comporte un équipement central de commande (20), ou en ce que des équipements de commande distincts sont intégrés en tant que matériel et/ou logitiel dans les au moins deux appareils de lecture (12a-d) spatialement adjacents.

3. Dispositif de personnalisation (10) selon la revendication 1, cependant que des appareils de lecture (12a-d) font partie d'un équipement d'activation (14) qui est configuré pour maintenir respectivement un support de données sans contact, durant une période d'activation, dans la zone d'activation ou de communication de respectivement un appareil de lecture (12a-d) pendant que le support de données sans contact peut recevoir des données de l'appareil de lecture (12a-d) respectif, et que le dispositif de personnalisation (10) comporte en outre un équipement d'acheminement (16a) pour l'acheminement de supports de données sans contact vers l'équipement d'activation (14) et/ou un équipement d'évacuation (16b) pour l'évacuation de supports de données sans contact hors de l'équipement d'activation (14).

4. Dispositif de personnalisation (10) selon la revendication 3, l'équipement d'activation étant configuré en tant que tambour d'activation (14) sur lequel les appareils de lecture (12a-d) sont installés de telle façon que ces derniers, en fonctionnement, tournent avec le tambour d'activation (14) autour d'un axe de rotation (R).

5. Dispositif de personnalisation (10) selon la revendication 4, le tambour d'activation (14) étant configuré de telle façon que les supports de données sans contact réceptionnés par les appareils de lecture (12a-d) sont, au moyen de l'équipement d'activation (14), déplacés d'une section de transfert de l'équipement d'acheminement (16a) à une section de transfert de l'équipement d'évacuation (16b), et sont, durant ce déplacement, respectivement tellement proches d'un appareil de lecture (12a-d) qu'un appareil de lecture (12a-d) respectif peut personnaliser un support de données sans contact respectif.

6. Dispositif de personnalisation (10) selon une des revendications de 1 à 5, cependant que les appareils de lecture (12a-d) sont respectivement configurés pour, après la personnalisation d'un support de données sans contact, émettre une suite sans fin de données aléatoires jusqu'à ce que l'appareil de lecture (12a-d) respectif ait remis le support de données sans contact personnalisé à l'équipement d'évacuation (16b) ou ait réceptionné de la part de l'équipement d'acheminement (16a) un prochain support de données sans contact à personnaliser.

7. Dispositif de personnalisation (10) selon une des revendications précédentes, le dispositif de personnalisation (10) étant configuré pour être alimenté en supports de données factices, et les appareils de lecture (12a-d) étant respectivement configurés de telle façon que, dès qu'un appareil de lecture (12a-d) respectif reconnaît un support de données factice, l'appareil de lecture (12a-d) respectif commence à émettre des données aléatoires.

8. Procédé de personnalisation de supports de données sans contact, en particulier de cartes à puce sans contact, le procédé comprenant les étapes suivantes:
l'alimentation d'un dispositif de personnalisation (10) en supports de données sans contact, le dispositif de personnalisation (10) comportant au moins deux appareils de lecture (12a-d) respectivement configurés pour transmettre sans contact des données à un support de données sans contact; et
la commande des appareils de lecture (12a-d) de telle façon que, chaque fois qu'au moins un premier appareil de lecture envoie des données de personnalisation à un support de données sans contact, au moins un deuxième appareil de lecture émet des données aléatoires qui se superposent de telle façon avec les données de personnalisation qu'un attaquant qui reçoit la superposition des donnés de personnalisation émises par le premier appareil de lecture et des données aléatoires émises par le deuxième appareil de lecture ne peut pas déduire les données de personnalisation émises par le premier appareil de lecture.
